# EUROPEAN PATENT APPLICATION

(11) **EP 2 006 767 A1**
(43) Date of publication of application: **24.12.2008**
(21) Application number: 08015974.2
(22) Date of filing: 28.10.2004
(51) Int. Cl.: G06F 9/40, G06F 9/445

(54) **A device, method and computer program for running a modular application**

(62) Divisional of application: 04791780.2
(71) Applicant: Nokia Corporation, 02150 Espoo (FI)
(72) Inventor: Rastas, Timo, 00420 Helsini (FI)
(74) Representative: Thould, Lee Matthew

(57) **Abstract**

A method of running a modular application, comprising a primary module for making function calls to one or more secondary modules, on an electronic (5) device, the method comprising:
a) detecting a function call from the primary module to a secondary module (60);
b) determining if the secondary module is stored locally at the electronic device (62);
c) if the secondary module is stored locally, accessing the locally stored (10) secondary module to enable the function call (82), and
d) if the secondary module is not stored locally, requesting (65) the secondary module from a remote server, receiving the secondary module from the remote server and storing the secondary module locally (80) and then accessing the locally stored secondary module to enable the function call (82).

## Description

### FIELD OF THE INVENTION

Embodiments of the present invention relate to a modular application.

### BACKGROUND TO THE INVENTION

When a mobile cellular telephone memory becomes full a user must delete applications in order to download a new application. However, if they subsequently want to re-use the deleted application they have to re-install it. If the user paid to download the application originally, they may have to pay to download it again. This will discourage users from downloading new applications.

Also, if user has paid to download a number of applications to one mobile cellular telephone, the user will be discouraged from purchasing a new replacement mobile cellular telephone if the user has to pay to download the same applications to the replacement mobile cellular telephone.

### BRIEF DESCRIPTION OF THE INVENTION

According to one embodiment of the invention there is provided a method of running a modular application, comprising a primary module for making function calls to one or more secondary modules, on an electronic device, the method comprising:
a) detecting a function call from the primary module to a secondary module;
b) determining if the secondary module is stored locally at the electronic device;
c) if the secondary module is stored locally, accessing the locally stored secondary module to enable the function call, and
d) if the secondary module is not stored locally, requesting the secondary module from a remote server, receiving the secondary module from the remote server and storing the secondary module locally and then accessing the locally stored secondary module to enable the function call.

According to another embodiment of the invention there is provided an electronic device for running a modular application, comprising a primary module for making function calls to secondary modules, the device comprising: a memory for storing the primary module and one or more secondary modules; detection means for detecting a function call from the primary module to a secondary module; request means for requesting a secondary module that is not stored in the memory from a remote server, reception means for receiving a requested secondary module from the remote server and for automatically storing the secondary module in the memory; and control means for enabling a function call from the primary module by accessing a secondary module stored in the memory.

According to another embodiment of the invention there is provided a computer program for controlling a modular application, comprising a primary module for making function calls to secondary modules, the computer program, providing when loaded into a processor: detection means for detecting a function call from a primary module to a secondary module; request means for requesting a secondary module that is not stored locally from a remote server for local storage; and control means for enabling a function call by accessing a secondary module stored locally.

According to another embodiment of the invention there is provided a system for running a modular application, comprising a primary module for making function calls to one or more secondary modules, the system comprising: one or more client devices and a server, wherein each client device comprises: a memory storing a primary module that is usable to make a function call to one or more secondary modules; request means for requesting a secondary module, which is not stored in the memory, from a remote server, reception means for receiving a requested secondary module from the remote server and for automatically storing the secondary module in the memory; and control means for enabling a function call by accessing a secondary module stored in the memory, and the server comprises: a memory storing a plurality of secondary modules each of which comprises one or more callable functions; a receiver for receiving a request identifying a secondary module from a client device; memory access means for obtaining the identified secondary module from the memory; and a transmitter for sending the obtained secondary module to the client device.

According to another embodiment of the invention there is provided a server for enabling a client device to run a modular application, comprising a primary module for making function calls to a plurality of secondary modules, the server comprising: a memory storing a plurality of secondary modules, for one or more modular applications, wherein each secondary module comprises one or more callable functions; a receiver for receiving a request identifying a secondary module from a client device; memory access means for obtaining the identified secondary module from the memory; and a transmitter for sending the obtained secondary module to the client device.

### BRIEF DESCRIPTION OF THE DRAWINGS

For a better understanding of the present invention reference will now be made by way of example only to the accompanying drawings in which:
Fig. 1 schematically illustrates a modular application;
Fig. 2 illustrates a system for running a modular application; and
Fig. 3 illustrates a method of running a modular application.

### DETAILED DESCRIPTION OF EMBODIMENTS OF THE INVENTION

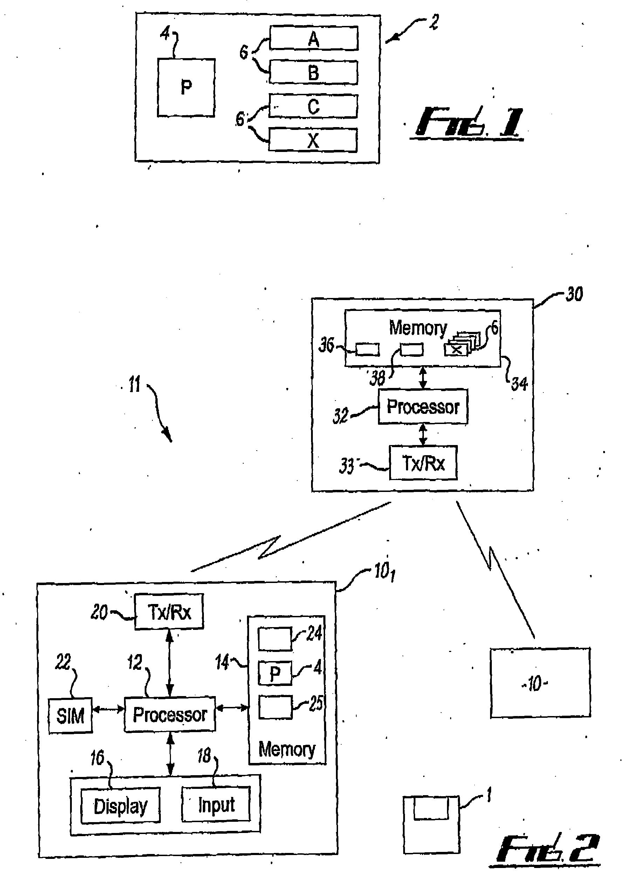

Fig. 1 schematically illustrates a modular application 2 that comprises a primary module 4 and a plurality of secondary modules 6. The secondary modules 6 include secondary module A, secondary module B, secondary module C and secondary module X. Each of the secondary modules 6 comprise one or more functions that are callable by the primary module 4. The modular application is run by the primary module 4 making function calls to the secondary modules. For example when the primary module 4 calls a function x it identifies the secondary module X, which comprises the function x, and the function x.

The primary module 4 typically includes code that is used to give a graphical representation of the application, such as an icon, and code that is used to launch the application when the icon is selected. The primary module 4 is therefore of relatively small size. The functionality of the application is primarily provided by the secondary modules 6 and the functions they comprise, which are called by the primary module 4. The secondary modules 6 are typically dynamic link libraries (DLL).

Figure 2 illustrates a system 11 for running a modular application 2. The system 11 comprises one or more client devices 10 and a remote server 30. Each of the client devices 10 comprises a processor 12, a memory 14, a user interface comprising a display 16 and an input device 18 and a input/output interface 20 for communicating with the server 30. In the example illustrated in Figure 2, the client device 10₁ is a hand-portable mobile cellular telephone and the input/output interface 20 is provided by a radio transceiver. Typically, this radio transceiver will operate over a cellular radio telecommunications network, however, it is possible for it to operate over an ad-hoc radio network such as a Bluetooth network or a WLAN network.

The processor 12 is connected to read from and write to the memory 14. It is also connected to receive input data from the input/output interface 20 and to provide output data to the input/output interface 20. In addition, the processor 12 receives input commands from the input device 18 and provides commands to the display 16. In the example illustrated in Figure 2, the mobile cellular telephone 10 comprises a subscriber identity module (SIM) card 22. This is a smart card that comprises data that identifies the user, such as the International Mobile Subscriber Identity (IMSI) and encryption engines. It is connected to the processor 12.

The memory 14 comprises computer program instructions 24, which when loaded into the processor 12 control the operation of the device 10. The memory 14, in addition, comprises a primary module 4, which when loaded into the processor 12 enables the user to launch a modular application which calls functions from secondary modules 6.

The server 30 comprises a processor 32 that is connected to write to and read from a memory 34 and is connected to receive input data from an input/output interface 33 and to provide output data to the input/output interface 33. The memory 34 comprises computer program instructions 36, which when loaded into the processor 32 control the operation of the server 30.

For a modular application 2 to be able to run on a device 10, the device 10 must store at least the primary module 4 in its memory 14. This enables the application 2 to be launched. If the memory 14 of the device 10 does not store the secondary modules 6 required for the modular application 2, then they can be downloaded to the memory 14 of the device 10 from a remote server 30 on an as-needed basis. That is, if the primary module 4 calls a function which is comprised in, for example, the secondary module A, then only the secondary module A is downloaded from the remote server 30 to the memory 14 of the device 10. This allows the modular application 2 to be easily transferred from one device to another, as initially, only the primary module 4 needs to be transferred with the secondary modules 6 being downloaded from the remote server 30 on an as-needed basis. Another advantage is that the memory 14 of the device 10 does not need to store code that is not necessary for running the modular application 2. Because of the modular nature of the application, only the secondary modules 6 that contain functions which are called are downloaded to the memory 14 of the device, thus saving memory space.

In the example of Fig. 2, the modular application 2 is distributed over the memory 14 of the device 10 and the memory 34 of the server 30. The primary module 4 that is necessary for launching of the modular application 2 is stored in the memory 14. The secondary modules A, B, C and X that are accessed by the primary module 4, when running the application, are permanently stored in the memory 34.

When the modular application 2 is launched, the primary module 4 is loaded from the memory 14 into the processor 12. In this example, the primary module 4 calls the function x which is comprised in the secondary module X. Although the required secondary module X is not stored locally at the device 10 in the memory 14, the device 10 is able to obtain a copy of the secondary module X from the memory 34 at the remote server 30. Once obtained, the secondary module X is stored in the local memory 14 of the device 10, and the function x is called. In the future, when the primary module 4 calls the function x, the secondary module X stored in the local memory 14 is accessed and the function is performed without having to download the secondary module X from the memory 34 of the server 30.

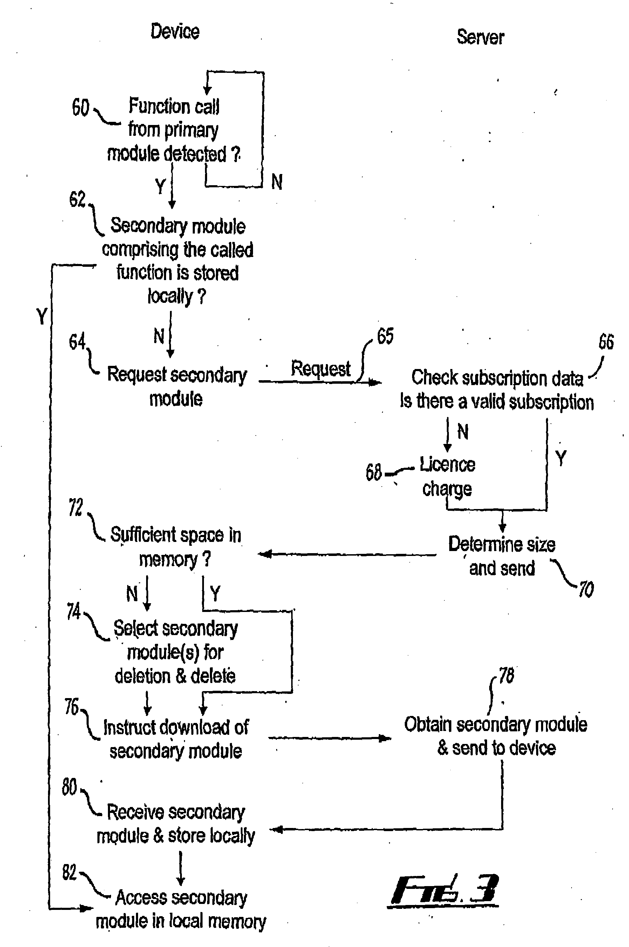

The method of running a modular application is illustrated in more detail in Figure 3. At step 60, the device 10 detects a function call by the primary module 4. The function call identifies the function and the secondary module that comprises the called function. For the purposes of this example, we will assume that the function x is called, which is comprised in the secondary module X. The function call by the primary module 4 consequentially identifies x and X.

The process moves to step 62, where the device 10 determines whether the secondary module 6 comprising the called function is stored locally. If the secondary module 6 is stored locally the process jumps to step 82. However, if the secondary module 6 is not stored locally the process moves to step 64 where a request 65 for the secondary module 6 is sent to the server 30. The request 65, identifies the secondary module 6 comprising the called function. Continuing the current example, the request 65 will identify the secondary module X. The request 65 also typically includes subscription information that is used in the server 30 to determine whether or not the device 10 is entitled to the requested secondary module 6 without charge. This subscription information may be a code originally issued with the license to use the application but it may also be information that identifies the device 10, such as the international mobile equipment identity (IMEI) or information that identifies the user of the device 10 such as the international mobile subscriber identity (IMSI).

The memory 34 in the server 30 stores a data structure 38 such as a database, for subscription data. The subscription data identifies the access rights for each client device 10. That is, the subscription data identifies whether and under what conditions a client device 10 can download a certain secondary module 6 from the memory 34 of the server 30. Typically the memory 34 of the server will store all of the secondary modules 6 for one or more modular applications 2.

For example, a user of a device 10 may not have any license to use a particular application 2, but may have received a primary module 4 from another user. In this case, when the user attempts to use the application 2, the primary module 4 will make a function call to one of the secondary modules 6 which will not be present on the user's device 10. The user's device will therefore subsequently access the remote server 30 to obtain the secondary module 6 comprising the called function. The server 30 however will not have any subscription data relating to this user for this application and will not provide the secondary module until the user has purchased a license. Once the user has purchased a license, the license is recorded in the subscription data.

It may be possible for a user to purchase different types of licenses. For example, a "device license" may be purchased or a "user license" may be purchased. A device license enables a particular device 10 to download the secondary modules 6 associated with a particular modular application 2 multiple times. A "user license" enables a user to download the secondary modules 6 of a particular application 2 multiple times to any device 10. If the subscription data relates to a device license, then the subscription data would record that a particular device 10 has access to particular secondary modules 6. The device 10 would therefore need to identify itself using the identifier in the request 65. For a user license, the subscription data would associate a user identifier, such as an IMSI, with particular secondary modules 6 and the request 65 sent by the device 10 would need to include the user identifier.

At step 66, in the server 30, the server 30 accesses the data structure 38 in the memory 34 and checks the subscription data. If the request 65 is authorized, for example, because it contains an identifier that is associated with the requested secondary module 6 in the subscription data then the process moves to step 70. If, however the subscription data does not authorize the request 65, then the server at step 68 transacts with the device 10 and enables the device 10 to purchase a license for the modular application 2. If a license is purchased, the process moves to step 70.

At step 70, the server 30 identifies the size of the requested secondary module 6 and sends a message to the device 10 indicating the size. The device 10 at step 72 determines whether or not there is sufficient space in its memory 14 for storing the requested secondary module. If there is sufficient space the process moves to step 76. If there is insufficient space, the device 10 automatically creates sufficient space at step 74. This is achieved by selecting secondary modules stored within the memory 14 of the device 10 for deletion and then deleting them.

A number of different criteria may be used for selecting secondary modules for deletion. For example, the frequency with which a secondary module is accessed may be used to delete the secondary module or modules that are least frequently accessed. As another example, the period of time since a secondary module was last accessed may be used to delete the secondary module or modules that have been unused for the greatest period of time. In order to determine the frequency with which a secondary module is accessed or the period of time since a secondary module has been accessed, it is necessary to record the accesses made to the secondary modules stored in the memory 14. This can be achieved by maintaining a data structure 25 within the memory 14 that records the accesses to each of the secondary modules 6 stored in the memory 14 within a specified time period and also records the date when the last access to a secondary module was made. It may, also be desirable to be able to flag certain secondary modules 6 as "protected" which would prevent their automatic deletion.

The device 10 may also or alternatively automatically create sufficient space at step 74 by selecting information other than secondary modules stored within the memory 14 of the device 10 for removal. In this scenario the information may not be downloadable to the device at some future point in time, so the information is removed by moving it to the server 30 where it is stored for future access by the device 10 or future download to the device 10.

Having deleted the selected files at step 74, the process then moves to step 76 where the device 10 instructs the server 30 to download the requested secondary module 6. The server 30 receives this instruction at step 78, obtains the requested secondary module 6 from the memory 34 and sends it to the device 10.

The device 10 at step 80 stores the received secondary module locally in the memory 14. The process then moves to step 82, where access is made to the locally stored secondary module to enable the function, to be performed.

It should be appreciated that the steps 60, 62, 64, 72, 74, 76, 80 and 82 that occur in the device 10 may occur automatically, that is without user intervention. Thus the process by which the modular application 2 operates is transparent to the user if they have a subscription for the modular application. The user may be aware of a slight delay in carrying out a function call if a secondary module 6 needs to be downloaded to the device 10 from the server 30 before the function can be executed.

It should be appreciated, that a modular application 2 can be distributed from one device 10 to another simply by transferring the primary module 4 from device 10 to device 10. The device 10 that receives the primary module 4, will not typically have any of the secondary modules 6. However, when the primary module 4 is activated and the application is run, the primary module will make a function call. The process illustrated in Figure 3 will therefore occur with a subscription being offered for the application at step 68. If the subscription is accepted, the secondary module 6 containing the called function will be downloaded to the device 10 and the function call will be executed. The next function call by the primary module 4 may or may not be in the secondary module that has previously been downloaded. If it is, the process of Figure 2 jumps from step 62 to step 82. If it is not, the process of Figure 3 downloads the secondary module 6 comprising the call function, for which it now has a subscription. Thus, the modules of the application 2 are downloaded on an as-needed basis.

It should be appreciated that the computer program instructions 24, when loaded into the processor 12, provide means within the device 10 for carrying out each of the steps 60, 62, 64, 72, 74, 76, 80 and 82 illustrated in Figure 3. The computer program instructions may be loaded into the memory 14 from a computer readable medium or a data carrier 1 or the computer program instructions may arrive at the device 10 via an electromagnetic carrier signal such as a CD-ROM or DVD.

The primary module 4 may be loaded into the memory 14 from a computer readable medium or a data carrier 1 or the primary module may arrive at the device 10 via an electromagnetic carrier signal such as a CD-ROM or DVD.

It may be possible to transfer a primary module from the memory 14 to the SIM card 22, so that when the user uses a different phone but the same SIM the modular application is available.

A method of running a modular application, comprising a primary module for making function calls to one or more secondary modules, on an electronic device, the method may comprise:
a) detecting a function call from the primary module to a secondary module;
b) determining if the secondary module is stored locally at the electronic device;
c) if the secondary module is stored locally, accessing the locally stored secondary module to enable the function call, and
d) if the secondary module is not stored locally, requesting the secondary module from a remote server, receiving the secondary module from the remote server and storing the secondary module locally and then accessing the locally stored secondary module to enable the function call.

The method may further comprise, before receiving and storing the secondary module, removing data from local storage.

The data may be automatically removed without user intervention.

The method may further comprise, before receiving and storing the secondary module;
receiving from the server an indication of the size of the secondary module;
determining whether there is sufficient local storage space for the secondary module; and
if there is insufficient local storage space, creating local storage space for the secondary module.

The creation of local storage space may involve the removal of data by deletion.

The creation of local storage space may involve the removal of data by moving it to a remote location.

The locally stored data may be selected for removal according to a predetermined criterion or predetermined criteria.

The selection may be automatic.

The method may further comprise: recording accesses to locally stored data, wherein the predetermined criterion or criteria depend upon one or more of; the time duration since data was last accessed, and the average time between accesses to data.

The removed data may correspond to one or more secondary modules of one or more modular applications.

Each secondary module may be a separate dynamic link library.

Steps a), b), c) and d), as defined in claim 1, may be automated and may occur without user intervention.

The electronic device may be a hand- portable electronic device and the request to the remote server may be made wirelessly.

The function call may identify the secondary module.

Requesting the secondary module may comprise sending subscription information to the server.

The subscription information may identify a user of the device.

The device may be a mobile telephone comprising a SIM card and the subscription information may be dependent upon the inserted SIM card.

At least the primary module may be transferable to another device.

A primary module adapted for use in the method as described in the preceding paragraphs.

A secondary module adapted for use in the method as described in the preceding paragraphs.

An electronic device for running a modular application, comprising a primary module for making function calls to secondary modules, the device may comprise:
a memory for storing the primary module and one or more secondary modules;
detection means for detecting a function call from the primary module to a secondary module;
request means for requesting a secondary module that is not stored in the memory from a remote server,
reception means for receiving a requested secondary module from the remote server and for automatically storing the secondary module in the memory; and
control means for enabling a function call from the primary module by accessing a secondary module stored in the memory.

The electronic device may further comprise:
means for automatically deleting one or more stored secondary modules of one or more modular applications from the memory to create sufficient space for storing the requested secondary module.

The electronic device may further comprise:
means for automatically selecting the secondary module(s) for deletion, wherein the selection is according to a predetermined criterion or predetermined criteria.

The electronic device may further comprise:
means for recording accesses to the memory, wherein the predetermined criterion or criteria depend upon one or more of: the time duration since a secondary module was last accessed, and the average time between accesses to a secondary module.

Each secondary module may be a separate dynamic link library.

The electronic device may be sized for hand- portability and may be operable to send requests to the remote server wirelessly.

Requesting the secondary module may comprise sending subscription information to the server.

The subscription information may identify a user of the device.

The electronic device may be arranged to transfer the primary module to another device.

A computer program for controlling a modular application, comprising a primary module for making function calls to secondary modules, the computer program, may provide when loaded into a processor:
detection means for detecting a function call from a primary module to a secondary module;
request means for requesting a secondary module that is not stored locally from a remote server for local storage; and
control means for enabling a function call by accessing a secondary module stored locally.

The computer program may further provide when loaded into a processor:
means for automatically deleting one or more stored secondary modules of one or more modular applications from the memory to create sufficient space
for storing the requested secondary module.

A computer readable medium embodying the computer program as described in the preceding paragraphs.

A system for running a modular application, comprising a primary module for making function calls to one or more secondary modules, the system may comprise: one or more client devices and a server, wherein
each client device comprises:
a memory storing a primary module that is usable to make a function call to one or more secondary modules;
request means for requesting a secondary module, which is not stored in the memory, from a remote server,
reception means for receiving a requested secondary module from the remote server and for automatically storing the secondary module in the memory; and
control means for enabling a function call by accessing a secondary module stored in the memory,
and the server comprises:
   a memory storing a plurality of secondary modules each of which comprises one or more callable functions;
   a receiver for receiving a request identifying a secondary module from a client device;
   memory access means for obtaining the identified secondary module from the memory; and
   a transmitter for sending the obtained secondary module to the client device.

A server for enabling a client device to run a modular application, comprising a primary module for making function calls to a plurality of secondary modules, the server may comprise:
a memory storing a plurality of secondary modules, for one or more modular applications, wherein each secondary module comprises one or more callable functions;
a receiver for receiving a request identifying a secondary module from a client device;
memory access means for obtaining the identified secondary module from the memory; and
a transmitter for sending the obtained secondary module to the client device.

The server may further comprise a data structure storing subscription data, wherein access to the identified secondary module by the memory access means is dependent upon the subscription data.

The subscription data may identify for each client device the secondary modules stored in the memory that are accessible without charge.

The server may further comprise charging means for making a charge to the client device for accessing the identified secondary module and updating the subscription data to identify that the client device can access the identified secondary module in the future without charge.

Although embodiments of the present invention have been described in the preceding paragraphs with reference to various examples, it should be appreciated that modifications to the examples given can be made without departing from the scope of the invention as claimed.

## Claims

1. A method comprising:
a) detecting a function call from a primary module of a modular application, running on an electronic device, to a secondary module of the modular application;
b) determining if the secondary module is stored locally at the electronic device;
c) if the secondary module is stored locally, accessing the locally stored secondary module to enable the function call, and
d) if the secondary module is not stored locally, requesting the secondary module from a remote server, receiving the secondary module from the remote server and storing the secondary module locally and then accessing the locally stored secondary module to enable the function call and further comprising, before receiving and storing the secondary module, automatically removing data from local storage without user intervention and wherein a locally stored secondary module is flagged as protected to prevent it being automatically deleted.

2. A method as claimed in claim 1 further comprising, before receiving and storing the secondary module:
receiving from the server an indication of the size of the secondary module;
determining whether there is sufficient local storage space for the secondary module; and
if there is insufficient local storage space, creating local storage space for the secondary module.

3. A method as claimed in claim 2, wherein the creation of local storage space involves the removal of data by deletion.

4. A method as claimed in claim 2 or 3, wherein the creation of local storage space involves the removal of data by moving it to a remote location.

5. A method as claimed in claim 4, further comprising: recording accesses to locally stored data, wherein the predetermined criterion or criteria depend upon one or more of: the time duration since data was last accessed, and the average time between accesses to data.

6. A method as claimed in any of the preceding claims, wherein the removed data corresponds to one or more secondary modules of one or more modular applications.

7. A method as claimed in any preceding claim, wherein blocks a), b), c) and d), as defined in claim 1, are automated and occur without user intervention.

8. A primary module adapted for use in the method of any one of claims 1 to 7.

9. A secondary module adapted for use in the method of any one of claims 1 to 7.

10. An electronic device comprising:
a memory for storing a primary module of a modular application, for running on the electronic device, and one or more secondary modules of the modular application;
detection means for detecting a function call from the primary module to a secondary module;
request means for requesting a secondary module that is not stored in the memory from a remote server,
reception means for receiving a requested secondary module from the remote server and for automatically storing the secondary module in the memory;
control means for enabling a function call from the primary module by accessing a secondary module stored in the memory; and means for automatically deleting, without user intervention, one or more stored secondary modules of one or more modular applications from the memory to create sufficient space for storing the requested secondary module and wherein a locally stored secondary module is flaggable as protected to prevent it being automatically deleted.

11. A device as claimed in claim 10, further comprising:
means for automatically selecting the secondary module(s) for deletion,
wherein the selection is according to a predetermined criterion or predetermined criteria.

12. A device as claimed in claim 11, further comprising:
means for recording accesses to the memory, wherein the predetermined
criterion or criteria depend upon one or more of: the time duration since a secondary module was last accessed, and the average time between
accesses to a secondary module.

13. A device as claimed in anyone of claims 11 to 12, sized for hand-portability and operable to send requests to the remote server wirelessly.

14. A computer program that, when run on a computer, performs:
a) detecting a function call from a primary module of a modular application, running on an electronic device, to a secondary module of the modular application;
b) determining if the secondary module is stored locally at the electronic device;
c) if the secondary module is stored locally, accessing the locally stored secondary module to enable the function call, and
d) if the secondary module is not stored locally, requesting the secondary module from a remote server, receiving the secondary module from the remote server and storing the secondary module locally and then accessing the locally stored secondary module to enable the function call and further comprising, before receiving and storing the secondary module, automatically removing data from local storage without user intervention and
wherein a locally stored secondary module is flagged as protected to prevent it being automatically deleted.

15. A computer program as claimed in claim 14 that, when run a computer, performs before receiving and storing the secondary module:
receiving from the server an indication of the size of the secondary module;
determining whether there is sufficient local storage space for the secondary module; and
if there is insufficient local storage space, creating local storage space for the secondary module.
